# EUROPÄISCHE PATENTSCHRIFT

(11) **EP 4 204 175 B1**
(45) Veröffentlichungstag und Bekanntmachung des Hinweises auf die Patenterteilung: **03.04.2024**
(21) Anmeldenummer: 22721799.9
(22) Anmeldetag: 14.04.2022
(51) Int. Cl.: B23K 3/06, B23K 1/005, B23K 26/70, B23K 26/14

(54) **VERFAHREN ZUM STEUERN ODER REGELN DER VORSCHUBGESCHWINDIGKEIT EINES DRAHTS AUS ABSCHMELZENDEM MATERIAL BEI EINEM LASERLÖT- ODER LASERSCHWEISSVERFAHREN SOWIE LASERLÖT- ODER LASERSCHWEISSVORRICHTUNG ZUR DURCHFÜHRUNG EINES SOLCHEN VERFAHRENS**
METHOD FOR CONTROLLING OR REGULATING THE FEED RATE OF A WIRE MADE FROM MELTABLE MATERIAL IN A LASER WELDING OR LASER SOLDERING PROCESS AND LASER WELDING OR LASER SOLDERING APPARATUS FOR CARRYING OUT SUCH A METHOD
PROCÉDÉ DE COMMANDE OU DE RÉGULATION DE LA VITESSE D'AVANCE D'UN FIL EN MATIÈRE EN FUSION DANS UN PROCÉDÉ DE SOUDAGE LASER OU DE BRASAGE LASER, AINSI QUE DISPOSITIF DE SOUDAGE LASER OU DE BRASAGE LASER PERMETTANT DE METTRE EN OEUVRE UN TEL PROCÉDÉ

(30) Priorität: 19.04.2021 EP 21169172
(43) Veröffentlichungstag der Anmeldung: 05.07.2023
(73) Patentinhaber: FRONIUS INTERNATIONAL GmbH, 4643 Pettenbach (AT)
(72) Erfinder: BINDER, Manuel, 4643 Pettenbach (AT); WALDHÖR, Andreas, 4643 Pettenbach (AT)
(74) Vertreter: SONN Patentanwälte GmbH & Co KG
(86) Internationale Anmeldenummer: PCT/EP2022/059983
(87) Internationale Veröffentlichungsnummer: WO 2022/223419

(56) Entgegenhaltungen:
- EP-A1- 3 560 649
- EP-A2- 1 125 672
- DE-A1- 4 412 093
- US-A- 4 467 176
- US-A1- 2010 176 109
- US-A1- 2013 092 667

## Beschreibung

Die Erfindung betrifft ein Verfahren zum Steuern oder Regeln der Vorschubgeschwindigkeit eines Drahts aus abschmelzendem Material bei einem Laserlöt- oder Laserschweißverfahren, bei dem der Draht mit einem Laserstrahl einer Lasereinheit aufgeschmolzen wird und mit einer mittleren Vorschubgeschwindigkeit in Richtung eines zu bearbeitenden Werkstücks gefördert wird, und dass eine Spannung zwischen dem Draht und dem Werkstück gemessen wird.

Die Erfindung betrifft auch eine Laserlöt- oder Laserschweißvorrichtung, mit einer Lasereinheit zum Aufschmelzen eines Drahts aus abschmelzendem Material, einer Drahtvorschubeinrichtung zur Förderung des Drahts mit einer Vorschubgeschwindigkeit in Richtung eines zu bearbeitenden Werkstücks, und mit einer Schaltung zur Messung der Spannung zwischen dem Draht und dem Werkstück.

Die Erfindung bezieht sich auf Laserlöt- und Laserschweißverfahren, bei welchen der Draht aus abschmelzendem Material automatisch in den Brennpunkt des Lasers bewegt wird, wo das Material des Drahts aufgeschmolzen wird und zur Verbindung von zumindest zwei Werkstücken oder zur Beschichtung der Oberfläche oder zur additiven Fertigung eines Werkstücks eingesetzt wird. Im Gegensatz zum Laserschweißen, bei dem auch das Material der zu verbindenden Werkstücke oder des zu beschichtenden Werkstücks aufgeschmolzen wird, kommt es beim Laserlöten zu keiner wesentlichen Aufschmelzung des Materials des Werkstücks. Wenn der Draht aus abschmelzendem Material vorgewärmt wird, kann die Abschmelzleistung erhöht werden. Man spricht dabei von Heißdrahtanwendungen (Heißdrahtlöten oder Heißdrahtschweißen) im Gegensatz zu Kaltdrahtanwendungen (Kaltdrahtlöten oder Kaltdrahtschweißen), bei welchen der Zusatzwerkstoff nicht vorgewärmt wird.

Beim Laserlöten und Laserschweißen ist es sehr wichtig, die Vorschubgeschwindigkeit des Drahts konstant zu halten und den abschmelzenden Zusatzwerkstoff immer in Kontakt mit dem flüssigen Schmelzbad zu halten. Dies ist nötig um den Löt- oder Schweißprozess stabil zu halten, den Heißdrahtstrom aufrecht zu erhalten und ein Aufbrechen des Kurzschlusses mit Entstehung eines Lichtbogens in jedem Fall zu vermeiden. Ein Aufbrechen des Kurzschlusses während des Löt- oder Schweißprozesses kann zu unterschiedlichsten Fehlstellen der Schweißnaht oder Lötnaht führen, wie beispielsweise Poren, Lunker, unregelmäßige Materialein- oder -aufbringung, thermische Unregelmäßigkeiten, optische Unregelmäßigkeiten, unterschiedlicher Einbrand, Gefügefehler usw. Insbesondere bei einer zum Werkstück vertikalen Positionsänderung des Löt- oder Schweißroboters bzw. des Werkstücks oder bei falschen Parametereinstellungen, wie z.B. einem zu hohen Strom zum Vorwärmen des Drahts bei Heißdrahtanwendungen, kann es zu einem unerwünschten Aufbrechen des Kurzschlusses zwischen Draht und Schmelzbad kommen. Durch die Verwendung eines speziellen Laserlöt- bzw. Laserschweißkopfs mit einem vorlaufenden taktilen Sensor, der die Position des Schweißkopfs regelt, kann ein Aufbrechen des Kurzschlusses aufgrund von Positionsänderungen des Schweißkopfs zum Werkstück verhindert werden. Störungen des Löt- oder Schweißprozesses aufgrund falscher oder ungeeigneter Parametereinstellungen oder Änderungen der thermischen Verhältnisse beim Löt- oder Schweißprozess können dadurch jedoch nicht verhindert werden.

Aus der DE 44 12 093 A1, welche den Oberbegriff des Anspruchs 1 offenbart, ist ein Verfahren und eine Vorrichtung zur Steuerung einer Laserschweißmaschine bekannt geworden, wobei zur Gewährleistung einer genauen Führung der Laserschweißmaschine auch bei unebenen Werkstückoberflächen der Fokussierkopf samt Zuführeinrichtung für den Schweißdraht über einen Zustellmotor senkrecht zum Werkstück bewegt wird.

Die EP 1 125 672 A2 beschreibt ein Verfahren und eine Vorrichtung zum Fügen von Werkstückteilen mittels eines Laserstrahls, bei welchen der Draht als mechanisches Tastelement verwendet wird, wobei die Drahtspitze kraftschlüssig entlang der Werkstückoberfläche geführt wird.

Die EP 3 560 649 A1 beschreibt ein Heißdrahtschweißverfahren, bei dem verschiedene Schweißparameter zur Regelung der Position des Werkstücks zur Lasereinheit und zur Vorwärmung des Drahtes herangezogen werden.

Die EP 3 170 613 A2 beschreibt ein Laserschweißverfahren, bei dem der Draht vorgewärmt wird. Dabei wird bei Erfassung eines Kontakts des Drahts mit dem Werkstück der Vorschub gestoppt. Zusätzlich wird die Kraft am Draht gemessen und bei steigender Kraft die Heizleistung des Drahts erhöht und bei sinkender Kraft die Heizleistung verringert.

Die US 4 467 176 A beschreibt ebenfalls eine Heißdrahtanwendung, wobei die Vorschubgeschwindigkeit des Drahts und der für die Erwärmung des Drahts gelieferte Strom entsprechend gesteuert werden, dass sie mit der Zeit synchron zueinander ansteigen.

Aus der US 2010/0176109 A1 ist bei einem Laserlötverfahren die Steuerung eines elektrischen Heizstroms in Abhängigkeit eines Kontakts des Drahtendes mit dem Werkstück bekannt geworden. Der Kontakt des Drahts wird über die Spannung zwischen Draht und Werkstück erfasst.

Schließlich beschreibt die US 2013/092667 A1 ein Laserschweißverfahren, wobei zur Verhinderung eines Aufbruchs des Kurzschlusses und der Bildung eines Lichtbogens zwischen Draht und Werkstück die Heizleistung des Drahts entsprechend geregelt wird.

Die Aufgabe der vorliegenden Erfindung besteht in der Schaffung eines oben genannten Verfahrens zum Steuern oder Regeln der Vorschubgeschwindigkeit eines Drahts aus abschmelzendem Material bei einem Laserlöt- oder Laserschweißverfahren und einer Laserlöt- oder Laserschweißvorrichtung, welche in einfacher Weise gewährleisten, dass der Draht aus abschmelzendem Material möglichst permanent in das Schmelzbad eintaucht und wirkungsvoll zumindest ein längeres Aufbrechen des Kurzschlusses und die Bildung eines Lichtbogens verhindert wird. Das mit dem Laserlöt- oder Laserschweißverfahren erzielte Ergebnis soll möglichst hohe Qualität aufweisen. Die Erfindung soll sowohl bei Verfahren ohne Vorwärmung des Drahts (Kaltdrahtanwendung) als auch bei Verfahren mit einer Vorwärmung des Drahts (Heißdrahtanwendung) einsetzbar sein. Nachteile bekannter Verfahren oder Vorrichtungen sollen vermieden oder zumindest reduziert werden.

Gelöst wird die erfindungsgemäße Aufgabe in verfahrensmäßiger Hinsicht dadurch, dass in Abhängigkeit der gemessenen Spannung die Vorschubgeschwindigkeit des Drahts vorübergehend auf eine vorgegebene Boostgeschwindigkeit erhöht wird, welche im Mittel mindestens 50 % über der mittleren Vorschubgeschwindigkeit vor der Erhöhung liegt, indem die Vorschubgeschwindigkeit des Drahts bei Überschreitung eines definierten Spannungsgrenzwerts auf die vorgegebene Boostgeschwindigkeit erhöht wird, und spätestens mit Unterschreitung des Spannungsgrenzwerts die Vorschubgeschwindigkeit des Drahts wieder reduziert wird. Durch die vorübergehende Erhöhung der Vorschubgeschwindigkeit in Abhängigkeit der gemessenen Spannung zwischen Draht und Werkstück kann das Aufbrechen des Kurzschlusses zwischen Draht und Werkstück verhindert werden oder zumindest sichergestellt werden, dass der Kurzschluss nur über sehr kurze Zeitspannen andauert und danach wieder geschlossen wird. Im Falle eines auftretenden Kurzschlusses sinken die Spannung sowie der Widerstand in Echtzeit ab und im Falle eines aufbrechenden Kurzschlusses steigen die Spannung sowie der Widerstand in Echtzeit an. Somit sind die Spannung und der Widerstand ideale Echtzeit-Messgrößen zur Bestimmung, ob ein Kurzschluss vorliegt oder ob kein Kurzschluss vorliegt. Ferner kann eine derartige Echtzeit-Messgröße, wie die Spannung oder der Widerstand, ohne großen Aufwand zum Steuern oder Regeln in Echtzeit verwendet werden. Das Verfahren lässt sich sowohl bei Kaltdrahtanwendungen als auch bei Heißdrahtanwendungen einsetzen und ist sehr einfach implementierbar. Bei Heißdrahtanwendungen kann die üblicherweise vorhandene elektronische Schaltung zum Einprägen eines Stroms in den Draht auch zum Messen der Spannung zwischen Draht und Werkstück verwendet werden. Bei Kaltdrahtanwendungen muss allenfalls die Schaltung zur Messung der Spannung zwischen Draht und Werkstück hinzugefügt werden. Durch die laufende Messung und Auswertung der Spannung zwischen Draht und Werkstück und bei Bedarf die vorübergehende Erhöhung der Vorschubgeschwindigkeit des Drahts auf die vorgegebene Boostgeschwindigkeit, dem sogenannten Boost-Vorgang, können zumindest länger andauernde Kurzschlüsse verhindert werden. Je rascher die Spannungsmessung und je dynamischer der Drahtvorschub ausgeführt wird, desto kürzer kann die Dauer allfälliger Aufbrüche des Kurzschlusses zwischen dem Draht und dem Werkstück gehalten werden. Insbesondere durch sogenannte hochdynamische Antriebsmotoren für den Vorschub des Drahts, also Motoren mit einer sehr hohen Beschleunigung und Geschwindigkeit, sind optimale Ergebnisse erzielbar. Mit modernen Direktantrieben ohne Getriebe können optimale Werte erzielt werden. Die vorgegebene Vorschubgeschwindigkeit des Drahts kann auch laufend mit der tatsächlichen Vorschubgeschwindigkeit verglichen werden und somit eine Regelung der Vorschubgeschwindigkeit durchgeführt werden oder auch ohne Kontrolle eingestellt oder vorgegeben werden entsprechend einer Steuerung.

Dass die Vorschubgeschwindigkeit des Drahts bei Überschreitung eines definierten Spannungsgrenzwerts auf die vorgegebene Boostgeschwindigkeit erhöht wird, und spätestens mit Unterschreitung des Spannungsgrenzwerts die Vorschubgeschwindigkeit des Drahts wieder reduziert wird, stellt einen einfach durchzuführenden Teil der Erfindung dar. Der Spannungsgrenzwert wird so gewählt, dass ein Kurzschlussaufbruch möglichst rasch aber auch möglichst zuverlässig erkannt wird.

Gemäß einem weiteren Merkmal der Erfindung ist vorgesehen, dass die Vorschubgeschwindigkeit auf eine vorgegebene Boostgeschwindigkeit erhöht wird, welche mindestens 10 m/min beträgt, wobei die Vorschubgeschwindigkeit vorzugsweise mit einer Geschwindigkeitsänderung von mindestens 2000 m/min/s erhöht wird. Dies stellt einen in der Praxis akzeptablen Wert für die Boostgeschwindigkeit dar. Natürlich ist es von Vorteil, wenn die Boostgeschwindigkeit möglichst hoch ist und die Geschwindigkeitsänderung, also die Beschleunigung ebenfalls möglichst hoch ist. Diese Anforderungen schlagen sich allerdings auch in einem meist höheren Preis für den Antrieb für die Drahtförderung nieder.

Bei einem Heißdrahtverfahren wird zum Vorwärmen des Drahts ein Strom in den Draht eingebracht, und eine resultierende Spannung gemessen, wobei in Abhängigkeit dieser gemessenen Spannung die Vorschubgeschwindigkeit vorübergehend auf die vorgegebene Boostgeschwindigkeit erhöht wird. Wie bereits oben erwähnt, kann beim Heißdrahtverfahren der Strom zum Vorwärmen des Drahts und die somit vorhandene Vorwärmespannung als Messspannung zwischen Draht und Werkstück verwendet werden, wodurch der Aufwand für das Verfahren sehr gering gehalten werden kann.

Dabei kann zusätzlich der Strom durch den Draht gemessen werden, und aus der gemessenen Spannung und dem gemessenen Strom ein Widerstand ermittelt werden und bei Überschreitung eines Widerstandsgrenzwerts die Vorschubgeschwindigkeit auf die vorgegebene Boostgeschwindigkeit erhöht werden, und die Vorschubgeschwindigkeit spätestens mit Unterschreitung des Widerstandsgrenzwerts wieder reduziert werden. Dies stellt eine weitere Ausführungsform des Verfahrens dar, bei der ebenso rasch auf drohende Aufbrüche des Kurzschlusses zwischen Draht und Schmelzbad reagiert werden kann.

Vorteilhafterweise wird die Vorschubgeschwindigkeit eine vorgegebene Zeitdauer nach der Erhöhung auf die Boostgeschwindigkeit zumindest einmal um einen vorgegebenen Vorschubgeschwindigkeitsbetrag reduziert. Dabei wird die Vorschubgeschwindigkeit nach der Erhöhung auf die Boostgeschwindigkeit stufenweise mit einer oder mehreren Stufen verringert, anstatt dass die Vorschubgeschwindigkeit gleich wieder auf den Wert vor der Erhöhung auf die Boostgeschwidnigkeit reduziert wird. Durch die schrittweise, langsamere Verringerung der Drahtvorschubgeschwindigkeit kann die Dauer eines Kurzschlusses noch weiter verringert werden, da es zu einem geringeren Überschwingen und eventuell zu einem geringeren Unterschwingen der Vorschubgeschwindigkeit kommt.

Gemäß einem weiteren Merkmal der Erfindung wird die Vorschubgeschwindigkeit mit Unterschreitung des Spannungsgrenzwerts oder des Widerstandsgrenzwerts wieder auf die mittlere Vorschubgeschwindigkeit vor der Erhöhung reduziert. Sobald also wieder ein Kurzschluss zwischen Draht und Werkstück erkannt wird, erfolgt eine Einstellung der Vorschubgeschwindigkeit entsprechend der Werte vor dem Aufbrechen des Kurzschlusses.

Weitere Verbesserungen des Laserlöt- oder Laserschweißverfahrens können dadurch erzielt werden, dass die Vorschubgeschwindigkeit mit Unterschreitung des Spannungsgrenzwerts oder des Widerstandsgrenzwerts auf eine um einen vorgegebenen Vorschubgeschwindigkeitsbetrag erhöhte mittlere Vorschubgeschwindigkeit reduziert bzw. eingestellt wird. Durch diese Maßnahme können gewisse Prozessparameter bei unerwünschten Positionsabweichungen des Bauteils oder falsch eingestellten thermischen Verhältnisse des Löt- oder Schweißprozesses automatisch angepasst werden. Durch die Erhöhung der Vorschubgeschwindigkeit um einen vorgegebenen Betrag nach jedem Boost-Vorgang kann eine Anpassung nach nur wenigen Kurzschlussaufbrüchen erzielt werden und es können zukünftige weitere Kurzschlussaufbrüche verhindert werden. Der jeweilige Vorschubgeschwindigkeitsbetrag, um welchen die Vorschubgeschwindigkeit nach einem Kurzschlussaufbruch erhöht wird, wird entsprechend den jeweiligen Gegebenheiten gewählt oder ermittelt oder automatisch anhand von Algorithmen berechnet.

Die um den Vorschubgeschwindigkeitsbetrag erhöhte mittlere Vorschubgeschwindigkeit kann nach Ablauf einer definierten Zeitspanne zumindest einmal um einen vorgegebenen Vorschubgeschwindigkeitsbetrag reduziert werden, bis die mittlere Vorschubgeschwindigkeit wieder erreicht wird. Durch diese Maßnahme kehrt die Vorschubgeschwindigkeit zumindest nach einer gewissen Zeitperiode wieder auf die ursprünglich eingestellten und gewählten Werte zurück. Dadurch kann das Laserlöt- oder Laserschweißverfahren nach einer kurzzeitigen Störung der Position oder Prozessparameter wieder mit den ursprünglichen Einstellungen fortgesetzt werden.

Bei einer Heißdrahtanwendung kann zusätzlich der Strom durch den Draht gesteuert oder geregelt werden, indem der Strom nach Erhöhung der Vorschubgeschwindigkeit auf die Boostgeschwindigkeit reduziert wird. Je höher der Stromfluss durch den Draht, desto höher ist die Abschmelzleistung des Drahts, und desto eher kann hin zu einem Kurzschlussaufbruch gesteuert oder geregelt werden. Je niedriger der Stromfluss durch den Draht, desto geringer ist die Abschmelzleistung des Drahts, und desto eher kann hin zu einem Kurzschluss gesteuert oder geregelt werden. Durch die schrittweise Absenkung des Stroms zum Vorwärmen des Drahts, der sogenannten Heißdrahtstromanpassung, nach jedem Kurzschluss bzw. Boost-Vorgang wird eine Anpassung der Prozessparameter erzielt und werden zukünftige Kurzschlüsse noch wahrscheinlicher verhindert. Die Reduktion des Stroms erfolgt vorzugsweise um einen vorgegebenen und definierten Strombetrag, welcher je nach Prozess ermittelt werden kann.

Wenn zusätzlich die Vorschubgeschwindigkeit des Drahts erfasst und daraus ein Rauschsignal generiert wird, und bei Überschreitung einer Rauschsignalschwelle die Steuerung oder Regelung der Vorschubgeschwindigkeit deaktiviert wird, kann eine fehlerhafte Detektion eines Kurzschlusses verhindert und das Verfahren noch sicherer gestaltet werden. Dadurch können Störeinflüsse reduziert werden und fehlerhafte Auslösungen des Boost-Vorgangs durch falsche Kurzschluss-Detektionen vermieden werden.

Wenn bei Überschreitung der Rauschsignalschwelle eine Warnung ausgegeben wird, kann der Anwender des Verfahrens über die Qualität der Drahtförderung informiert und bei unzulässig hohen Rauschsignalen auch ein Stoppen des Laserlöt- oder Laserschweißprozesses empfohlen oder durchgeführt werden.

Gelöst wird die erfindungsgemäße Aufgabe auch durch eine oben genannte Laserlöt- oder Laserschweißvorrichtung, welche eine Steuer- oder Regeleinrichtung aufweist, die zur Durchführung des oben beschriebenen Verfahrens ausgebildet ist. Eine derartige Vorrichtung ist mit relativ geringem Aufwand realisierbar. Insbesondere bei Heißdrahtanwendungen kann die ohnedies vorhandene Einrichtung zum Anlegen eines Stroms an den Draht auch zur Erfassung der Spannung zwischen dem Draht und dem Werkstück zur Erkennung des Kurzschlusses verwendet werden. Aber auch bei Kaltdrahtanwendungen hält sich der Aufwand in Grenzen. Wichtig dabei ist, dass die Erkennung des Kurzschlusses möglichst rasch erfolgt und die Steuerung oder Regelung der Vorschubgeschwindigkeit auch mit einer möglichst hohen Beschleunigung erfolgt. Zu den weiteren erzielbaren Vorteilen wird auf die obige Beschreibung des Verfahrens verwiesen.

Vorteilhafterweise ist die Drahtvorschubeinrichtung durch einen getriebelosen Direktantrieb gebildet. Durch einen derartigen Direktantrieb ist eine besonders rasche Steuerung oder Regelung der Vorschubgeschwindigkeit mit einer hohen Beschleunigung möglich.

Gemäß einem Merkmal der Erfindung ist die Drahtvorschubeinrichtung zur Förderung des Drahts mit einer Vorschubgeschwindigkeit von mindestens 10 m/min und vorzugsweise mit einer Geschwindigkeitsänderung von mindestens 2000 m/min/s ausgebildet. Derartige hochdynamische Antriebe sind für die Durchführung des erfindungsgemäßen Verfahrens besonders geeignet.

Die vorliegende Erfindung wird anhand der beigefügten Zeichnungen näher erläutert. Darin zeigen:
- Fig. 1: ein schematisches Blockschaltbild einer Laserlöt- oder Laserschweißvorrichtung mit einer Steuerung oder Regelung der Vorschubgeschwindigkeit des Drahts aus abschmelzendem Material;
- Fig. 2: die zeitlichen Verläufe der Spannung, der Vorschubgeschwindigkeit und des Stroms am Draht gemäß einer ersten Ausführungsform der Erfindung;
- Fig. 3: die zeitlichen Verläufe der Spannung, der Vorschubgeschwindigkeit und des Stroms am Draht gemäß einer zweiten Ausführungsform der Erfindung;
- Fig. 4: die zeitlichen Verläufe der Spannung, der Vorschubgeschwindigkeit und des Stroms am Draht gemäß einer dritten Ausführungsform der Erfindung;
- Fig. 5: die zeitlichen Verläufe der Spannung, der Vorschubgeschwindigkeit und des Stroms am Draht gemäß einer vierten Ausführungsform der Erfindung;
- Fig. 6: die zeitlichen Verläufe der Spannung, der Vorschubgeschwindigkeit und des Stroms am Draht gemäß einer fünften Ausführungsform der Erfindung;
- Fig. 7: die zeitlichen Verläufe der Position des Löt- oder Schweißkopfs in z-Richtung, der Spannung, der Vorschubgeschwindigkeit und des Stroms am Draht gemäß einer sechsten Ausführungsform der Erfindung;
- Fig. 8: die zeitlichen Verläufe der Spannung, der Vorschubgeschwindigkeit, des Widerstands und des Stroms am Draht gemäß einer weiteren Ausführungsform der Erfindung;
- Fig. 9: die zeitlichen Verläufe der Position des Löt- oder Schweißkopfs in z-Richtung, der Spannung, der Vorschubgeschwindigkeit, des Widerstands und des Stroms am Draht gemäß einer weiteren Ausführungsform der Erfindung; und
- Fig. 10: die zeitlichen Verläufe der Position des Löt- oder Schweißkopfs in z-Richtung, der Spannung, der Vorschubgeschwindigkeit, des Widerstands, des Stroms am Draht, eines ermittelten Rauschsignals und eines Warnsignals, wenn eine gewisse Rauschsignalschwelle überschritten wird, gemäß einer weiteren Ausführungsform der Erfindung.

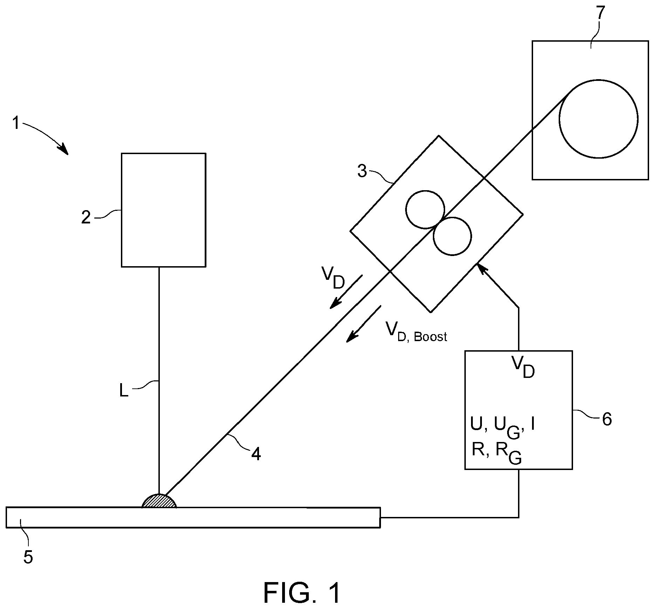

In Fig. 1 ist ein schematisches Blockschaltbild einer Laserlöt- oder Laserschweißvorrichtung 1 mit einer Steuerung oder Regelung der Vorschubgeschwindigkeit v_{D} des Drahts 4 aus abschmelzendem Material dargestellt. Der Draht 4 aus abschmelzendem Material wird vom Laserstrahl L einer Lasereinheit 2 aufgeschmolzen, um zumindest zwei Werkstücke 5 miteinander zu verbinden oder eine Beschichtung auf einem Werkstück 5 herzustellen oder zur additiven Fertigung eines Werkstücks 5 zu verwenden. Zu diesem Zweck wird der Draht 4 von einer Drahttrommel 7 über eine Drahtvorschubeinrichtung 3 mit einer vorgegebenen Vorschubgeschwindigkeit v_{D} in den Brennpunkt oder Auftreffpunkt des Laserstrahls L am Werkstück 5 gefördert und dort durch die Energie des Laserstrahls L aufgeschmolzen. Beim Laserschweißen kommt es auch zu einem Aufschmelzen des Materials des zumindest einen Werkstücks 5, während es beim Laserlöten zu keiner wesentlichen Aufschmelzung des Materials des Werkstücks 5 kommt. Zusätzlich kann der Draht 4 durch einen Strom I, der in der Drahtvorschubeinrichtung 7 an den Draht 4 gelegt wird, vorgewärmt werden (Heißdrahtlöten oder Heißdrahtschweißen). Beim Laserlöten und Laserschweißen ist es für die Prozessstabilität sehr wichtig, die Vorschubgeschwindigkeit v_{D} des Drahts 4 konstant zu halten und den Draht 4 immer in Kontakt mit dem flüssigen Schmelzbad zu halten. Erfindungsgemäß wird in einer Steuer- oder Regeleinrichtung 6 in Abhängigkeit der gemessenen Spannung U zwischen Draht 4 und Werkstück 5 die Vorschubgeschwindigkeit v_{D} des Drahts 4 vorübergehend auf eine vorgegebene Boostgeschwindigkeit v_{D,Boost} erhöht. Vorteilhafterweise wird bei Überschreitung eines definierten Spannungsgrenzwerts U_{G} der Spannung U zwischen Draht 4 und Werkstück 5 die Vorschubgeschwindigkeit v_{D} des Drahts 4 auf die vorgegebene Boostgeschwindigkeit v_{D,Boost} erhöht, und spätestens mit Unterschreitung des Spannungsgrenzwerts U_{G} die Vorschubgeschwindigkeit v_{D} des Drahts 4 wieder reduziert. Durch Berücksichtigung auch des Stroms I durch den Draht 4 kann auch ein Widerstand R ermittelt werden und bei Überschreitung eines Widerstandsgrenzwerts R_{G} die Vorschubgeschwindigkeit v_{D} auf die vorgegebene Boostgeschwindigkeit v_{D,Boost} erhöht werden und der Boost-Vorgang durchgeführt werden.

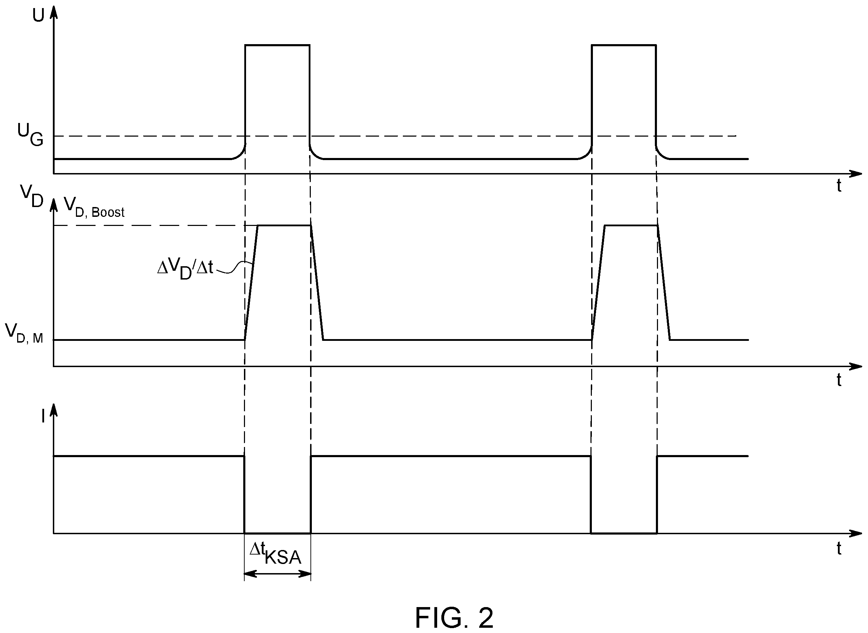

Fig. 2 zeigt die zeitlichen Verläufe der Spannung U, der Vorschubgeschwindigkeit v_{D} und des Stroms I am Draht 4 gemäß einer ersten Ausführungsform der Erfindung. Durch die Messung der Spannung U zwischen Draht 4 und Werkstück 5 kann ein ungewollter Kurzschlussaufbruch detektiert werden. Beispielsweise kann der Kurzschlussaufbruch mit Überschreitung eines definierten Spannungsgrenzwerts U_{G} festgelegt werden. Der Kurzschlussaufbruch ist auch durch einen Einbruch des hier dargestellten Stroms I durch den Draht 4 ersichtlich. Die Messung des Stroms I ist aber nicht zwingend notwendig. In Abhängigkeit der gemessenen Spannung U und hier mit Überschreitung des definierten Spannungsgrenzwerts U_{G} wird die Vorschubgeschwindigkeit v_{D} des Drahts 4 vorübergehend auf eine vorgegebene Boostgeschwindigkeit v_{D,Boost} erhöht, wobei die Boostgeschwindigkeit v_{D,Boost} mindestens 50 % über der mittleren Vorschubgeschwindigkeit v_{D,M} vor der Erhöhung liegt, insbesondere mindestens 10 m/min beträgt. Im dargestellten Beispiel ist die Boostgeschwindigkeit v_{D,Boost} um ein Vielfaches höher als die mittlere Vorschubgeschwindigkeit v_{D,M} vor der Erhöhung, was allerdings eine entsprechende Drahtvorschubeinrichtung erfordert. Die Erhöhung der Vorschubgeschwindigkeit v_{D} auf die Boostgeschwindigkeit v_{D,Boost} erfolgt vorzugsweise möglichst rasch, also mit einer möglichst hohen Beschleunigung, vorzugsweise mit einer Geschwindigkeitsänderung Δv_{D}/Δt von mindestens 2000 m/min/s. Dadurch wird dem Kurzschlussaufbruch wirkungsvoll entgegengewirkt, wodurch dieser nach einer Dauer Δt_{KSA}, welche im Ausführungsbeispiel unverhältnismäßig lang dargestellt wurde, wieder beendet werden kann. Der Wiedereintritt des Kurzschlusses wird durch einen Zusammenbruch der gemessenen Spannung U und eine Unterschreitung des definierten Spannungsgrenzwerts U_{G} erkannt, worauf die Vorschubgeschwindigkeit v_{D} wieder reduziert wird. Hier erfolgt nach dem Kurzschlussaufbruch und dem Boost-Vorgang eine Reduktion der Vorschubgeschwindigkeit v_{D} wieder auf jene mittlere Vorschubgeschwindigkeit v_{D,M} des Drahts 4, welche vor dem Kurzschlussaufbruch eingestellt war. Durch verschiedene Ereignisse, wie zum Beispiel einer äußeren Störung des Laserlöt- oder Laserschweißprozesses (z.B. einer Schwankung der Höhenposition, einem zu hoch eingestellten Strom I zum Vorwärmen des Drahts 4, Schwankungen der Löt- oder Schweißgeschwindigkeit, etc.) kann es erneut zu einem Kurzschlussaufbruch kommen, wie in den Zeitdiagrammen ersichtlich. Sobald ein weiterer Kurzschlussaufbruch detektiert wird, erfolgt wiederum ein Boost-Vorgang und eine Erhöhung der Vorschubgeschwindigkeit v_{D} des Drahts auf die Boostgeschwindigkeit v_{D,Booost}, wodurch die Dauer Δt_{KSA} des Kurzschlussaufbruchs sehr gering gehalten werden kann.

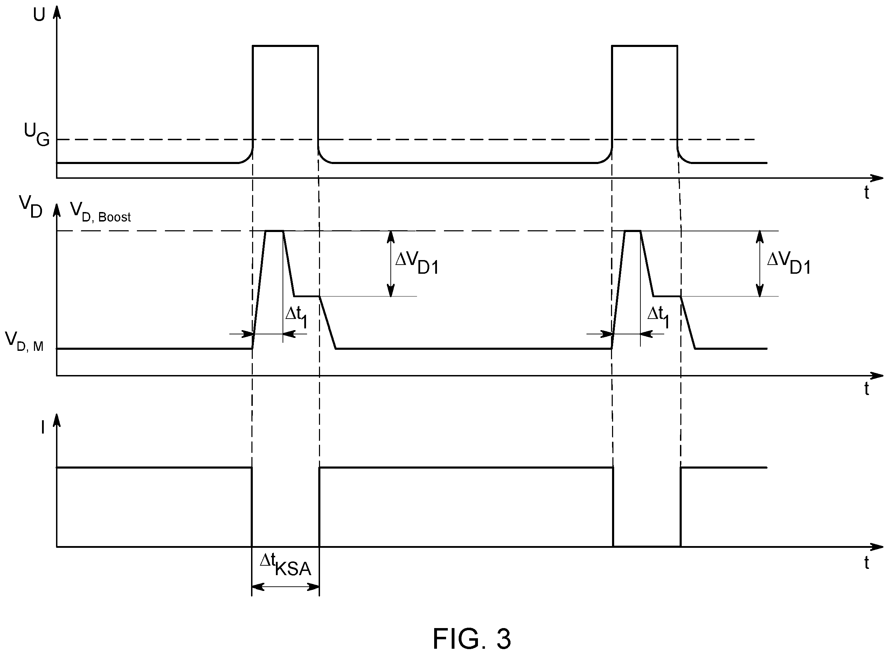

Fig. 3 zeigt die zeitlichen Verläufe der Spannung U, der Vorschubgeschwindigkeit v_{D} und des Stroms I am Draht 4 gemäß einer zweiten Ausführungsform der Erfindung. Dabei wird im Gegensatz zur ersten Ausführungsform gemäß Fig. 2 beim Kurzschlussaufbruch die Vorschubgeschwindigkeit v_{D} eine vorgegebene Zeitdauer Δt₁ nach der Erhöhung auf die Boostgeschwindigkeit v_{D,Boost} um einen vorgegebenen Vorschubgeschwindigkeitsbetrag Δv_{D1} reduziert. Durch eine solche stufige Reduktion der Vorschubgeschwindigkeit v_{D} kann eine sanftere Geschwindigkeitsreduktion und eine Verringerung eines Überschwingens bzw. eines Unterschwingens erzielt werden.

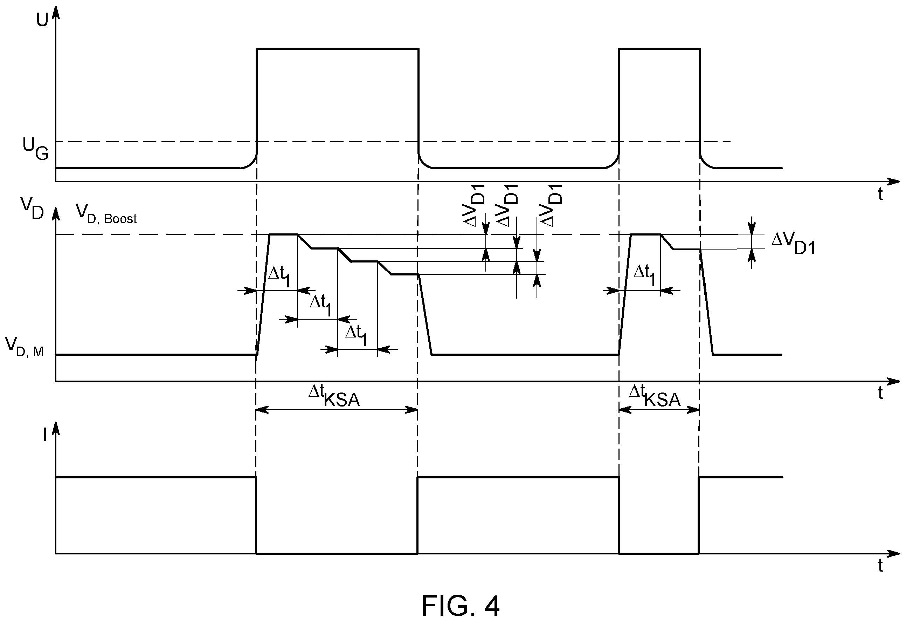

Fig. 4 zeigt die zeitlichen Verläufe der Spannung U, der Vorschubgeschwindigkeit v_{D} und des Stroms I am Draht 4 gemäß einer dritten Ausführungsform der Erfindung, wobei die Reduktion der Vorschubgeschwindigkeit v_{D} in mehreren Stufen erfolgt, bis der Kurzschlussaufbruch nach Ablauf der Dauer Δt_{KSA} beendet werden kann. Im Gegensatz zum Ausführungsbeispiel gemäß Fig. 3 zeigt dieses Ausführungsbeispiel ein mehrstufiges Verfahren zur Reduktion der Vorschubgeschwindigkeit v_{D}. Der zweite dargestellte Kurzschlussaufbruch ist kürzer, weshalb hier die Boostgeschwindigkeit v_{D,Boost} nur einmal um den vorgegebenen Vorschubgeschwindigkeitsbetrag Δv_{D1} reduziert wird, bevor der Kurzschlussaufbruch nach der Dauer Δt_{KSA} beendet ist.

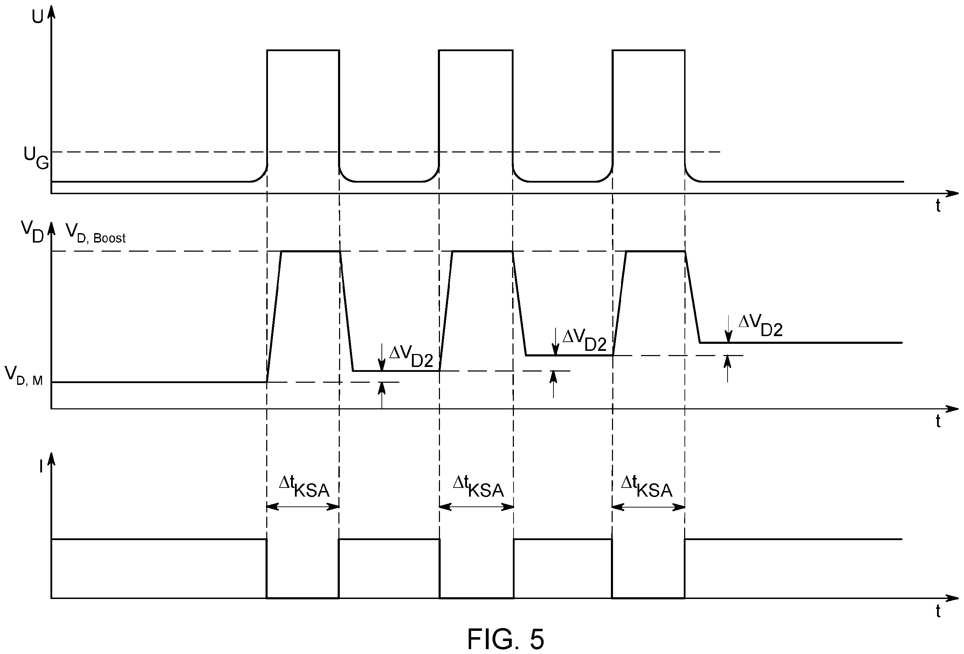

In Fig. 5 sind die zeitlichen Verläufe der Spannung U, der Vorschubgeschwindigkeit v_{D} und des Stroms I am Draht 4 gemäß einer vierten Ausführungsform der Erfindung dargestellt. Gemäß einer Variante wird hier die Vorschubgeschwindigkeit v_{D} mit Unterschreitung des Spannungsgrenzwerts U_{G} nach Wiederherstellung des Kurzschlusses nach der Dauer Δt_{KSA} auf eine um einen vorgegebenen Vorschubgeschwindigkeitsbetrag Δv_{D2} erhöhte mittlere Vorschubgeschwindigkeit v_{D,M} reduziert. Durch dieses Hochregeln der mittleren Vorschubgeschwindigkeit v_{D,M} nach dem Kurschlussaufbruch kann eine Anpassung des Prozesses erzielt werden, wodurch zukünftige Kurzschlussaufbrüche besser verhindert werden können.

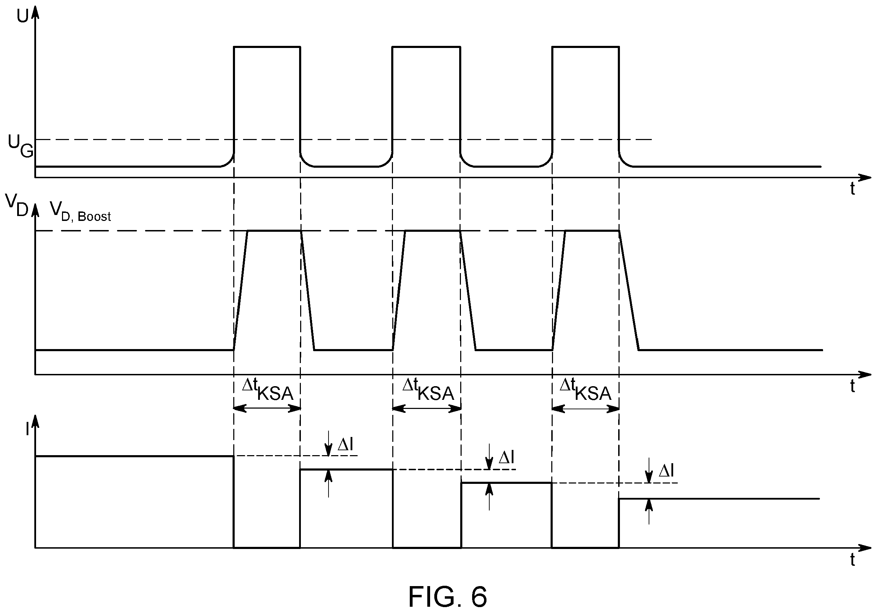

In Fig. 6 werden die zeitlichen Verläufe der Spannung U, der Vorschubgeschwindigkeit v_{D} und des Stroms I am Draht 4 gemäß einer fünften Ausführungsform der Erfindung mit einer Vorwärmung des Drahts 4 dargestellt. Hier wird der Strom I durch den Draht 4 so gesteuert oder geregelt, dass der Strom I nach dem Kurzschlussaufbruch, also nach der Erhöhung der Vorschubgeschwindigkeit v_{D} auf die Boostgeschwindigkeit v_{D,Boost} beispielsweise um einen vorgegebenen Strombetrag ΔI reduziert wird. Auch durch diese Maßnahme, welche auch mit der in Fig. 5 dargestellten Ausführungsvariante kombiniert werden kann, wird eine entsprechende Anpassung des Prozesses erzielt und werden zukünftige Kurzschlussaufbrüche eher verhindert.

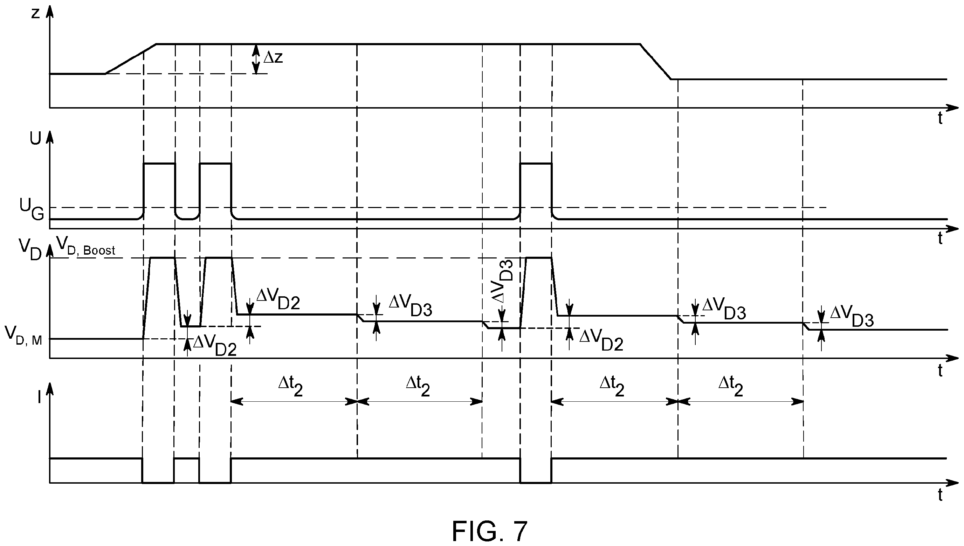

Fig. 7 zeigt die zeitlichen Verläufe der Position z des Löt- oder Schweißkopfs in vertikaler Richtung zum Werkstück 5, der Spannung U, der Vorschubgeschwindigkeit v_{D} und des Stroms I am Draht 4 gemäß einer sechsten Ausführungsform der Erfindung. Wie anhand des Verlaufs des obersten Zeitdiagramms der z-Position ersichtlich ist, erfolgt eine Änderung der Position um die Höhe Δz und später wieder eine Reduktion der z-Position. Bei Detektion eines Kurzschlussaufbruchs wird, wie bereits anhand des Ausführungsbeispiels gemäß Fig. 5 beschrieben, nach einer Wiederherstellung des Kurzschlusses nach der Dauer Δt_{KSA} die Vorschubgeschwindigkeit v_{D} auf eine um einen vorgegebenen Vorschubgeschwindigkeitsbetrag Δv_{D2} erhöhte mittlere Vorschubgeschwindigkeit v_{D,M} reduziert. Zusätzlich wird hier nach Ablauf einer definierten Zeitspanne Δt₂ die mittlere Vorschubgeschwindigkeit v_{D,M} nach dem Kurzschlussaufbruch zumindest einmal um einen vorgegebenen Vorschubgeschwindigkeitsbetrag Δv_{D3} reduziert, bis die mittlere Vorschubgeschwindigkeit v_{D,M} wieder erreicht wird. Durch die schrittweise Erhöhung der mittleren Vorschubgeschwindigkeit v_{D,M} nach jedem Boost-Vorgang kann die Wahrscheinlichkeit neuerlicher Kurzschlussaufbrüche reduziert werden. Nach einer gewissen Zeitspanne Δt₂ wird die mittlere Vorschubgeschwindigkeit v_{D,M} wieder sukzessive auf den ursprünglich eingestellten Wert gesenkt. Ist zum Zeitpunkt des Erreichens der ursprünglichen mittleren Vorschubgeschwindigkeit v_{D,M} die Störung der z-Position noch vorhanden, kommt es wiederum zu einem Kurzschlussaufbruch mit einem Boost-Vorgang mit anschließender weiterer Erhöhung der mittleren Vorschubgeschwindigkeit v_{D,M}.

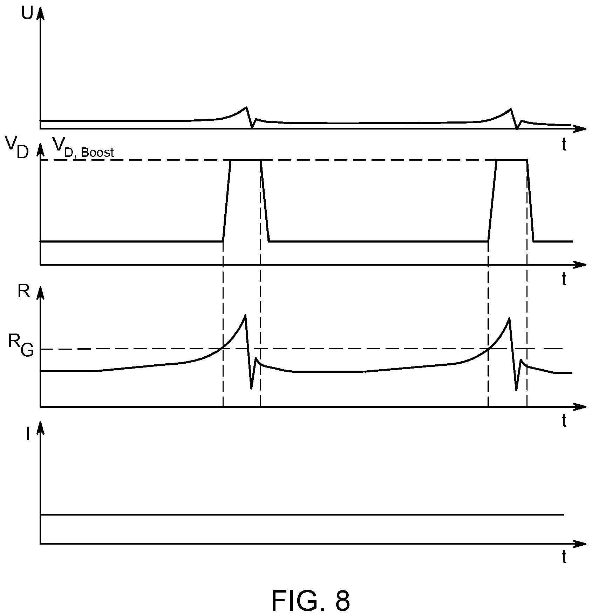

Fig. 8 zeigt die zeitlichen Verläufe der Spannung U, der Vorschubgeschwindigkeit v_{D}, des Widerstands R und des Stroms I am Draht 4 gemäß einer weiteren Ausführungsform der Erfindung. Dabei wird neben der Spannung U auch der Strom I erfasst und daraus der Widerstand R berechnen, und dieser in Echtzeit ausgewertet. Da es vor dem eigentlichen Kurzschlussaufbruch zu einem zuerst langsamen, und dann immer steiler ansteigenden Widerstand R kommt, kann auch dieser Anstieg oder aber auch die Änderungsgeschwindigkeit des Widerstands R überwacht werden. Überschreitet der Widerstand R einen vorgegebenen Widerstandsgrenzwert R_{G}, kann ebenfalls der Boost-Vorgang mit der erhöhten Boostgeschwindigkeit v_{D,Boost} ausgelöst werden. Der Vorteil dieser Steuerungs- oder Regelungsvariante ist, dass hier der Kurschlussaufbruch im Idealfall komplett verhindert werden kann. Es kommt also zu keinem Zeitpunkt zum Aufreißen der Schmelzbadbrücke bzw. des Kurzschlusses zwischen Draht 4 und Werkstück 5. Der Einfluss auf den Lötprozess oder Schweißprozess und auf die fertige Löt- oder Schweißnaht ist hier am geringsten.

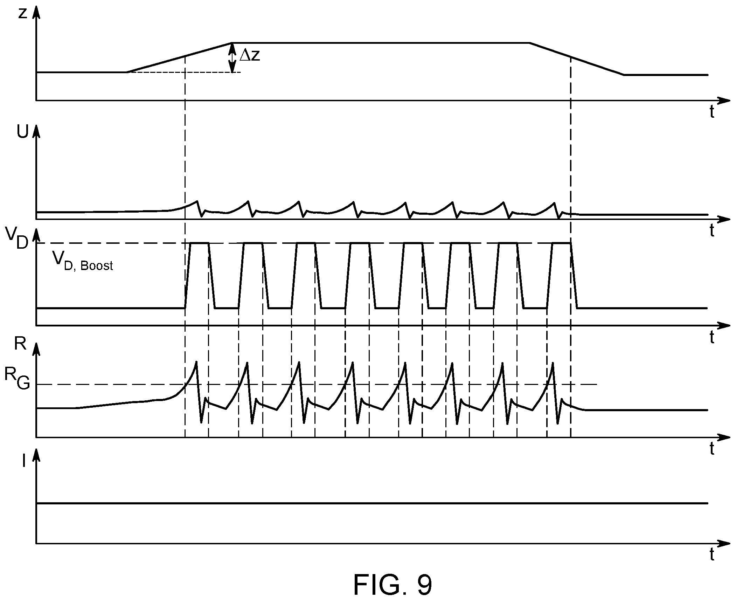

Fig. 9 zeigt die zeitlichen Verläufe der z-Position des Löt- oder Schweißkopfs in vertikaler Richtung, der Spannung U, der Vorschubgeschwindigkeit v_{D}, des Widerstands R und des Stroms I am Draht 4 gemäß einer weiteren Ausführungsform der Erfindung. Zu Beginn läuft der Laserlöt- oder Laserschweißprozess stabil und ohne Störungen mit definierter Vorschubgeschwindigkeit v_{D} und definiertem Strom I zum Vorwärmen des Drahts 4 ab. Die Spannung U ist annähernd Null. Wird die z-Position durch eine Änderung der Höhe Δz vergrößert, würde es bei weiterhin konstanter Vorschubgeschwindigkeit v_{D} zu Kurzschlussaufbrüchen kommen. Durch die Messung der Spannung und des Stroms I, Berechnung eines Widerstands R und Beobachtung des Überschreitens eines Widerstandsgrenzwerts R_{G} kann gemäß dem in Fig. 8 beschriebenen Verfahren der Kurzschlussaufbruch wirkungsvoll verhindert werden. Nach dem Zurückkehren des Laser- oder Schweißkopfs in die ursprüngliche z-Position kommt es zu keinen Erhöhungen der Spannung U oder des Widerstands R und somit zu keinen Boost-Vorgängen und der Laserlöt- oder Laserschweißprozess läuft wieder stabil.

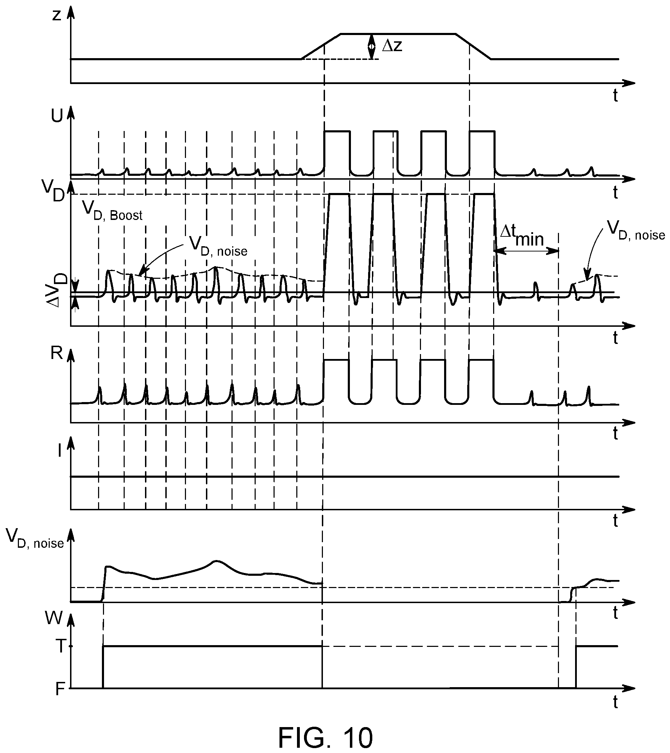

Schließlich zeigt Fig. 10 die zeitlichen Verläufe der z-Position, der Spannung U, der Vorschubgeschwindigkeit v_{D}, des Widerstands R, des Stroms I am Draht 4, eines ermittelten Rauschsignals v_{D,noise} und eines Warnsignals, wenn eine gewisse Rauschsignalschwelle v_{D,noise,s} überschritten wird, gemäß einer weiteren Ausführungsform der Erfindung. Hier erfolgt eine zusätzliche Überwachung der aktuellen Vorschubgeschwindigkeit v_{D} auf Störungen bzw. Signalrauschen. Durch eine vorzugsweise hochdynamische Vorschubeinrichtung für den Draht 4, welcher vorzugsweise direkt ohne Getriebe mit dem Draht 4 gekoppelt ist, wird es möglich auch geringste Störungen in der Vorschubgeschwindigkeit v_{D} zu detektieren und diese dann entsprechend auszuwerten. Zum einen hat eine Überwachung solcher kurzen Störspitzen grundsätzlich auch ohne die Verwendung des erfindungsgemäßen Kurzschluss-Stabilisators Sinn, da das daraus generierte Rauschsignal v_{D,noise} Aufschluss über die allgemeine Qualität der Förderung des Drahts 4 gibt, und dementsprechend auch ein Warnsignal W für einen allfälligen Prozess-Stopp generiert werden kann. Zum anderen ist es für eine stabile Funktion des Boost-Vorgangs in der Variante mit der Auswertung des Widerstands R zweckmäßig oder sogar erforderlich, auch das Rauschsignal v_{D,noise} auszuwerten und zu berücksichtigen. Durch gewissen Störungen in der Förderstrecke des Drahts 4 bzw. falschen Einstellungen kann es zu ähnlichen Verläufen der Spannung U bzw. des Widerstands R kommen, wie bei einem bevorstehenden Kurzschlussaufbruch. Dadurch würde ein Boost-Vorgang fälschlicherweise ausgelöst werden. Durch eine zusätzliche Auswertung des Rauschsignals v_{D,noise} kann dies verhindert werden und es werden nur tatsächliche Kurzschlussaufbrüche erkannt. Wenn das Rauschsignal v_{D,noise} eine Rauschsignalschwelle v_{D,noise,s} überschreitet, kann ein Warnsignal W ausgegeben werden. Durch diesen Fehler sind Rückschlüsse auf die Qualität der Förderung des Drahts 4 möglich und es kann gegebenenfalls auch der Prozess gestoppt werden. Eine weitere Funktion dieses Warnsignals W wäre das automatische Umschalten des Auslösealgorithmus für den Kurzschluss-Stabilisator. Steht das Warnsignal W auf F für "FALSE", kann der schnellere und wirkungsvollere Algorithmus über die Auswertung des Verlaufs des Widerstands R verwendet werden. Steht das Warnsignal auf T für "TRUE", funktioniert die Auswertung des Verlaufs des Widerstands R nicht oder nicht optimal, und es wird der Auslösealgorithmus über die Detektion des tatsächlichen Kurzschlussaufbruchs über die Spannung U verwendet. Durch eine Veränderung der z-Position des Werkstücks 5 oder Roboters kann es zum Aufreißen der Schmelzbadbrücke zwischen Draht 4 und Werkstück 5 bzw. Schmelzbad kommen. Das Warnsignal W steht auf T für "TRUE", somit wird der Boost-Vorgang durch die Messung der Spannung U ausgelöst. Die Generierung des Rauschsignals v_{D,noi-se} wird für die Dauer der Boost-Vorgänge vorzugsweise deaktiviert und erst nach Ablauf einer gewissen Wartezeit Δtₘᵢₙ zum Einschwingen aller Signalverläufe wieder gestartet.

## Patentansprüche

1. Verfahren zum Steuern oder Regeln der Vorschubgeschwindigkeit (v_{D}) eines Drahts (4) aus abschmelzendem Material bei einem Laserlöt- oder Laserschweißverfahren, bei dem ein Strom (I) in den Draht (4) eingebracht wird und der Draht (4) mit einem Laserstrahl (L) einer Lasereinheit (2) aufgeschmolzen wird und mit einer mittleren Vorschubgeschwindigkeit (v_{D,M}) in Richtung eines zu bearbeitenden Werkstücks (5) gefördert wird, wobei eine Spannung (U) zwischen dem Draht (4) und dem Werkstück (5) gemessen wird, **dadurch gekennzeichnet, dass** in Abhängigkeit der gemessenen Spannung (U) die Vorschubgeschwindigkeit (v_{D}) des Drahts (4) vorübergehend auf eine vorgegebene Boostgeschwindigkeit (v_{D,Boost}) erhöht wird, welche im Mittel mindestens 50 % über der mittleren Vorschubgeschwindigkeit (v_{D,M}) vor der Erhöhung liegt, indem bei Überschreitung eines definierten Spannungsgrenzwerts (U_{G}) die Vorschubgeschwindigkeit (v_{D}) auf die vorgegebene Boostgeschwindigkeit (v_{D,Boost}) erhöht wird, und die Vorschubgeschwindigkeit (v_{D}) spätestens mit Unterschreitung des Spannungsgrenzwerts (U_{G}) wieder reduziert wird.

2. Verfahren nach Anspruch 1, **dadurch gekennzeichnet, dass** die Vorschubgeschwindigkeit (v_{D}) auf eine vorgegebene Boostgeschwindigkeit (v_{D,Boost}) erhöht wird, welche mindestens 10 m/min beträgt, wobei die Vorschubgeschwindigkeit (v_{D}) vorzugsweise mit einer Geschwindigkeitsänderung (Δv_{D}/Δt) von mindestens 2000 m/min/s erhöht wird.

3. Verfahren nach Anspruch 1 oder 2, **dadurch gekennzeichnet,**
**dass** zum Vorwärmen des Drahts (4) ein Strom (I) in den Draht (4) eingebracht wird, und eine resultierende Spannung (U_{M}) gemessen wird, und in Abhängigkeit dieser gemessenen Spannung (U_{M}) die Vorschubgeschwindigkeit (v_{D}) vorübergehend auf die vorgegebene Boostgeschwindigkeit (v_{D,Boost}) erhöht wird.

4. Verfahren nach Anspruch 3, **dadurch gekennzeichnet, dass** zusätzlich der Strom (I) durch den Draht (4) gemessen wird, und
aus der gemessenen Spannung (U_{M}) und dem gemessenen Strom (I) ein Widerstand (R) ermittelt wird und bei Überschreitung eines Widerstandsgrenzwerts (R_{G}) die Vorschubgeschwindigkeit (v_{D}) auf die vorgegebene Boostgeschwindigkeit (v_{D,Boost}) erhöht wird, und dass die Vorschubgeschwindigkeit (v_{D}) spätestens mit Unterschreitung des Widerstandsgrenzwerts (R_{G}) wieder reduziert wird.

5. Verfahren nach einem der Ansprüche 1 bis 4, **dadurch gekennzeichnet, dass** die Vorschubgeschwindigkeit (v_{D}) eine vorgegebene Zeitdauer (Δt₁) nach der Erhöhung auf die Boostgeschwindigkeit (v_{D,Boost}) zumindest einmal um einen vorgegebenen Vorschubgeschwindigkeitsbetrag (Δv_{D1}) reduziert wird.

6. Verfahren nach einem der Ansprüche 1 bis 5, **dadurch gekennzeichnet, dass** die Vorschubgeschwindigkeit (v_{D}) mit Unterschreitung des Spannungsgrenzwerts (U_{G}) oder des Widerstandsgrenzwerts (R_{G}) wieder auf die mittlere Vorschubgeschwindigkeit (v_{D,M}) vor der Erhöhung reduziert wird.

7. Verfahren nach einem der Ansprüche 1 bis 5, **dadurch gekennzeichnet, dass** die Vorschubgeschwindigkeit (v_{D}) mit Unterschreitung des Spannungsgrenzwerts (U_{G}) oder des Widerstandsgrenzwerts (R_{G}) auf eine um einen vorgegebenen Vorschubgeschwindigkeitsbetrag (Δv_{D2}) erhöhte mittlere Vorschubgeschwindigkeit (v_{D,M}) reduziert wird.

8. Verfahren nach Anspruch 7, **dadurch gekennzeichnet, dass** die um den Vorschubgeschwindigkeitsbetrag (Δv_{D2}) erhöhte mittlere Vorschubgeschwindigkeit (v_{D,M}) nach Ablauf einer definierten Zeitspanne (Δt₂) zumindest einmal um einen vorgegebenen Vorschubgeschwindigkeitsbetrag (Δv_{D3}) reduziert wird, bis die mittlere Vorschubgeschwindigkeit (v_{D,M}) wieder erreicht wird.

9. Verfahren nach einem der Ansprüche 1 bis 8, **dadurch gekennzeichnet, dass** der Strom (I) durch den Draht (4) gesteuert oder geregelt wird, indem der Strom (I) nach Erhöhung der Drahtvorschubsgeschwindigkeit (v_{D}) auf die Boostgeschwindigkeit (v_{D,Boost}) reduziert wird, vorzugsweise um einen vorgegebenen Strombetrag (ΔI).

10. Verfahren nach einem der Ansprüche 1 bis 9, **dadurch gekennzeichnet, dass** die Vorschubgeschwindigkeit (v_{D}) des Drahts (4) erfasst und daraus ein Rauschsignal (v_{D,noise}) generiert wird, und bei Überschreitung einer Rauschsignalschwelle (v_{D,noise,s}) die Steuerung oder Regelung der Vorschubgeschwindigkeit (v_{D}) deaktiviert wird.

11. Verfahren nach Anspruch 10, **dadurch gekennzeichnet, dass** bei Überschreitung der Rauschsignalschwelle (v_{D,noise,s}) eine Warnung ausgegeben wird.

12. Laserlöt- oder Laserschweißvorrichtung (1), mit einer Lasereinheit (2) zum Aufschmelzen eines Drahts (4) aus abschmelzendem Material, einer Drahtvorschubeinrichtung (3) zur Förderung des Drahts (4) mit einer Vorschubgeschwindigkeit (v_{D}) in Richtung eines zu bearbeitenden Werkstücks (5), und mit einer Schaltung zur Messung der Spannung (U) zwischen dem Draht (4) und dem Werkstück (5), **dadurch gekennzeichnet, dass** die Laserlöt- oder Laserschweißvorrichtung (1) eine Steuer- oder Regeleinrichtung (6) aufweist, die zur Durchführung des Verfahrens nach einem der Ansprüche 1 bis 12 ausgebildet ist.

13. Laserlöt- oder Laserschweißvorrichtung (1) nach Anspruch 12, **dadurch gekennzeichnet, dass** die Drahtvorschubeinrichtung (3) durch einen getriebelosen Direktantrieb gebildet ist.

14. Laserlöt- oder Laserschweißvorrichtung (1) nach Anspruch 12 oder 13, **dadurch gekennzeichnet, dass** die Drahtvorschubeinrichtung (3) zur Förderung des Drahts (4) mit einer Vorschubgeschwindigkeit von mindestens 10 m/min, vorzugsweise mit einer Geschwindigkeitsänderung (Δv_{D}/Δt) von mindestens 2000 m/min/s ausgebildet ist.

## Claims

1. A method for regulating or controlling the conveyance speed (v_{D}) of a wire (4) composed of consumable material during a laser soldering or laser welding method, wherein a current (I) is supplied to the wire (4) and the wire (4) is melted by a laser beam (L) from a laser unit (2) and is conveyed at a mean conveyance speed (v_{D,M}) in the direction of a workpiece (5) to be processed, wherein a voltage (U) between the wire (4) and the workpiece (5) is measured, **characterised in that**, as a function of the measured voltage (U), the conveyance speed (v_{D}) of the wire (4) is temporarily increased to a predetermined boost speed (v_{D,Boost}), which is on average at least 50% above the mean conveyance speed (v_{D,M}) before the increase, by increasing the conveyance speed (v_{D}) to the predetermined boost speed (v_{D,Boost}) when a defined voltage limit value (U_{G}) is exceeded, and reducing the conveyance speed (v_{D}) again at the latest when the voltage limit value (U_{G}) falls below.

2. The method according to claim 1, **characterised in that** the conveyance speed (v_{D}) is increased to a predetermined boost speed (v_{D,Boost})which is at least 10 m/min, the conveyance speed (v_{D}) preferably being increased with a speed change (Δv_{D}/Δt) of at least 2000 m/min/s.

3. The method according to claim 1 or 2, **characterised in that**, in order to preheat the wire (4), a current (I) is supplied to the wire (4), and a resulting voltage (U_{M}) is measured, and the conveyance speed (v_{D}) is temporarily increased to the predetermined boost speed (v_{D,Boost}) as a function of this measured voltage (U_{M}) .

4. The method according to claim 3, **characterised in that** the current (I) through the wire (4) is additionally measured, and a resistance (R) is determined from the measured voltage (U_{M}) and the measured current (I), and, if a resistance limit value (R_{G}) is exceeded, the conveyance speed (v_{D}) is increased to the predetermined boost speed (v_{D,Boost}), and **in that** the conveyance speed (v_{D}) is reduced again at the latest when the resistance limit value (R_{G}) falls below.

5. The method according to any one of claims 1 to 4, **characterised in that** the conveyance speed (v_{D}) is reduced at least once by a predetermined conveyance speed amount (Δv_{D1}) for a predetermined period of time (Δt₁) after the increase to the boost speed (v_{D,Boost}).

6. The method according to any one of claims 1 to 5, **characterised in that** the conveyance speed (v_{D}) is again reduced to the mean conveyance speed (v_{D,M}) before the increase when the voltage limit value (U_{G}) or the resistance limit value (R_{G}) falls below.

7. The method according to any one of claims 1 to 5, **characterised in that** the conveyance speed (v_{D}) is reduced to a mean conveyance speed (v_{D,M}) increased by a predetermined conveyance speed amount (Δv_{D2}) when the voltage limit value (U_{G}) or the resistance limit value (R_{G}) falls below.

8. The method according to claim 7, **characterised in that** the mean conveyance speed (v_{D,M}) increased by the conveyance speed amount (Δv_{D2}) is reduced at least once after a defined period of time (Δt₁) has elapsed by a predetermined conveyance speed amount (Δv_{D3}), until the mean conveyance speed (v_{D,M}) is reached again.

9. The method according to any one of claims 1 to 8, **characterised in that** the current (I) is regulated or controlled by the wire (4) by reducing the current (I), after increasing the wire conveyance speed (v_{D}), to the boost speed (v_{D,Boost}) , preferably by a predetermined current amount (ΔI).

10. Method according to any one of claims 1 to 9, **characterised in that** the conveyance speed (v_{D}) of the wire (4) is detected and a noise signal (v_{D,noise}) is generated therefrom, and, if a noise signal threshold (v_{D,noise,S}) is exceeded, the regulation or control of the conveyance speed (v_{D}) is deactivated.

11. The method according to claim 10, **characterised in that** a warning is issued when the noise signal threshold (v_{D,noise,S}) is exceeded.

12. A laser soldering or laser welding device (1), comprising a laser unit (2) for melting a wire (4) of consumable material, a wire conveyance device (3) for conveying the wire (4) at an conveyance speed (v_{D}) in the direction of a workpiece (5) to be processed, and a circuit for measuring the voltage (U) between the wire (4) and the workpiece (5), **characterised in that** the laser soldering or laser welding device (1) comprises a regulating or control device (6) which is designed to carry out the method according to any one of claims 1 to 12.

13. The laser soldering or laser welding device (1) according to claim 12, **characterised in that** the wire conveyance device (3) is formed by a gearless direct drive.

14. The laser soldering or laser welding device (1) according to claim 12 or 13, **characterised in that** the wire conveyance device (3) for conveying the wire (4) is designed with a conveyance speed of at least 10 m/min, preferably with a speed change (Δv_{D}/Δt) of at least 2000 m/min/s.

## Revendications

1. Procédé de commande ou de régulation de la vitesse d'avance (v_{D}) d'un fil (4) en matériau consommable dans un procédé de brasage laser ou de soudage laser, dans lequel un courant (I) est introduit dans le fil (4) et le fil (4) est fondu avec un faisceau laser (L) d'une unité laser (2) et est transporté à une vitesse d'avance moyenne (v_{D,M}) en direction d'une pièce (5) à usiner, dans lequel une tension (U) entre le fil (4) et la pièce (5) est mesurée, **caractérisé en ce qu'**en fonction de la tension (U) mesurée, la vitesse d'avance (v_{D}) du fil (4) est temporairement augmentée jusqu'à une vitesse de renfort (v_{D, Boost}) prédéterminée, qui est située en moyenne au moins 50 % au-dessus de la vitesse d'avance moyenne (v_{D,M}) avant l'augmentation, par le fait qu'en cas de dépassement d'une valeur limite de tension (U_{G}) définie, la vitesse d'avance (v_{D}) est augmentée jusqu'à la vitesse de renfort (v_{D, Boost}) prédéterminée, et la vitesse d'avance (v_{D}) est réduite de nouveau au plus tard lors du franchissement vers le bas de la valeur limite de tension (U_{G}).

2. Procédé selon la revendication 1, **caractérisé en ce que** la vitesse d'avance (v_{D}) est augmentée jusqu'à une vitesse de renfort (v_{D, Boost}) prédéterminée, qui est d'au moins 10 m/min, dans lequel la vitesse d'avance (v_{D}) est de préférence augmentée avec une variation de vitesse (Δv_{D}/Δt) d'au moins 2 000 m/min/s.

3. Procédé selon la revendication 1 ou 2, **caractérisé en ce que** pour préchauffer le fil (4), un courant (I) est introduit dans le fil (4), et une tension (U_{M}) résultante est mesurée, et en fonction de cette tension (U_{M}) mesurée, la vitesse d'avance (v_{D}) est temporairement augmentée jusqu'à la vitesse de renfort (v_{D, Boost}) prédéterminée.

4. Procédé selon la revendication 3, **caractérisé en ce que** le courant (I) dans le fil (4) est en outre mesuré, et une résistance (R) est déterminée à partir de la tension (U_{M}) mesurée et du courant (I) mesuré, et en cas de dépassement d'une valeur limite de résistance (R_{G}), la vitesse d'avance (v_{D}) est augmentée jusqu'à la vitesse de renfort (v_{D, Boost}) prédéterminée, et **en ce que** la vitesse d'avance (v_{D}) est réduite de nouveau au plus tard lors du franchissement vers le bas de la valeur limite de résistance (R_{G}).

5. Procédé selon l'une des revendications 1 à 4, **caractérisé en ce que** la vitesse d'avance (v_{D}) est réduite au moins une fois d'une quantité de vitesse d'avance (Δv_{D1}) prédéterminée pendant une période de temps (Δt₁) prédéterminée après l'augmentation jusqu'à la vitesse de renfort (v_{D, Boost}).

6. Procédé selon l'une des revendications 1 à 5, **caractérisé en ce que** la vitesse d'avance (v_{D}) est réduite de nouveau jusqu'à la vitesse d'avance moyenne (v_{D,M}) avant l'augmentation lors du franchissement vers le bas de la valeur limite de tension (U_{G}) ou de la valeur limite de résistance (R_{G}).

7. Procédé selon l'une des revendications 1 à 5, **caractérisé en ce que** la vitesse d'avance (v_{D}) est réduite jusqu'à une vitesse d'avance moyenne (v_{D,M}) augmentée d'une quantité de vitesse d'avance (Δv_{D2}) prédéterminée lors du franchissement vers le bas de la valeur limite de tension (U_{G}) ou de la valeur limite de résistance (R_{G}).

8. Procédé selon la revendication 7, **caractérisé en ce que** la vitesse d'avance moyenne (v_{D,M}) augmentée de la quantité de vitesse d'avance (Δv_{D2}), après l'écoulement d'une période de temps (Δt₁) définie, est réduite au moins une fois d'une quantité de vitesse d'avance (Δv_{D3}) prédéterminée, jusqu'à ce que la vitesse d'avance moyenne (v_{D,M}) soit atteinte de nouveau.

9. Procédé selon l'une des revendications 1 à 8, **caractérisé en ce que** le courant (I) dans le fil (4) est commandé ou régulé par le fait que le courant (I) est réduit, de préférence d'une quantité de courant (ΔI) prédéterminée, après augmentation de la vitesse d'avance de fil (v_{D}) jusqu'à la vitesse de renfort (v_{D, Boost}).

10. Procédé selon l'une des revendications 1 à 9, **caractérisé en ce que** la vitesse d'avance (v_{D}) du fil (4) est enregistrée et un signal de bruit v_{D, noise}) est généré à partir de celle-ci, et en cas de dépassement d'un seuil de signal de bruit (v_{D, noise, s}), la commande ou la régulation de la vitesse d'avance (v_{D}) est désactivée.

11. Procédé selon la revendication 10, **caractérisé en ce qu'**une alerte est émise en cas de dépassement du seuil de signal de bruit (v_{D, noise,} S).

12. Dispositif de brasage laser ou de soudage laser (1), avec une unité laser (2) pour faire fondre un fil (4) en matériau consommable, un dispositif d'avance de fil (3) pour transporter le fil (4) à une vitesse d'avance (v_{D}) en direction d'une pièce (5) à usiner, et avec un circuit de mesure de la tension (U) entre le fil (4) et la pièce (5), **caractérisé en ce que** le dispositif de brasage laser ou de soudage laser (1) comporte un dispositif de commande ou de régulation (6) qui est conçu pour mettre en oeuvre le procédé selon l'une des revendications 1 à 12.

13. Dispositif de brasage laser ou de soudage laser (1) selon la revendication 12, **caractérisé en ce que** le dispositif d'avance de fil (3) est formé par un entraînement direct sans engrenage.

14. Dispositif de brasage laser ou de soudage laser (1) selon la revendication 12 ou 13, **caractérisé en ce que** le dispositif d'avance de fil (3) est conçu pour transporter le fil (4) à une vitesse d'avance d'au moins 10 m/min, de préférence avec une variation de vitesse (Δv_{D}/Δt) d'au moins 2000 m/min/s.
